# EUROPÄISCHE PATENTSCHRIFT

(11) **EP 0 538 186 B1**
(45) Veröffentlichungstag und Bekanntmachung des Hinweises auf die Patenterteilung: **31.07.1996**
(21) Anmeldenummer: 92810716.8
(22) Anmeldetag: 17.09.1992
(51) Int. Cl.: B01L 9/04, B01D 3/08

(54) **Höhenverstellbares Stativ für Laborgeräte**
Height-adjustable support for laboratory equipment
Support ajustable en hauteur pour dispositifs de laboratoire

(30) Priorität: 18.10.1991 CH 3063/91
(43) Veröffentlichungstag der Anmeldung: 21.04.1993
(73) Patentinhaber: Büchi Labortechnik AG, CH-9230 Flawil (CH)
(72) Erfinder: Bossart, Erwin, ch-9230 Flawil (CH)
(74) Vertreter: Hepp, Dieter

(56) Entgegenhaltungen:
- EP-A- 0 149 972
- EP-A- 0 156 937
- WO-A-86/03684
- DE-A- 2 649 950
- DE-A- 3 330 764

## Beschreibung

Die Erfindung betrifft ein höhenverstellbares Stativ für Laborgeräte, insbesondere für Rotationsverdampfer gemäss dem Oberbegriff von Anspruch 1.

Höhenverstellbare Stative für Laborgeräte, insbesondere für Rotationsverdampfer sind in den verschiedensten Ausführungsformen bekannt und gebräuchlich. So zeigt z.B. die EP-A1-149 972 ein höhenverstellbares Stativ, bei welchem die Halteeinrichtung des Stativs mit Hilfe eines Kraftspeichers anhebbar und absenkbar ist. In einer alternativen Betriebsart ist die Halteeinrichtung auch über einen Motor verschiebbar, der durch eine Schaltvorrichtung auskuppelbar ist. Zur Arretierung der Halteeinrichtung bei Handbetrieb dient eine Zahnstange, welche parallel zur Stativstange angeordnet ist.

Aus der CH-A-664 503 ist eine Hubvorrichtung für einen Rotationsverdampfer bekannt, bei welchem eine an der Stativstange vertikal verschiebbare Halteeinrichtung mittels einer Spindel angehoben bzw. abgesenkt werden kann. Die Spindel wird durch einen Elektromotor angetrieben. Durch Einschalten und Ausschalten des Motors lässt sich die Hubvorrichtung steuern.

Durch die WO 86/03684 ist ein Vakuumverdampfer mit einer höhenverstellbaren Halterung bekannt geworden, die durch das freie Ende eines Hebelarms getragen und an einem fussgestellfesten Bolzen verschiebbar ist. Der Hebelarm steht mit einer Gewindehülse in Verbindung, in welcher eine drehbare Gewindewelle angeordnet ist. Die Verbindung zwischen der Gewindehülse und dem Hebelarm erfolgt über eine Kupplungshülse, welche bei einem etwaigen Stromausfall durch Lösen einer Stellschraube von der Gewindehülse trennbar ist.

Ein wesentliches Problem derartiger Hubvorrichtungen besteht darin, dass sie einerseits relativ langsam im Betrieb anhebbar oder absenkbar sein sollen. Anderseits können sich jedoch Situationen ergeben, in denen ein sehr schnelles Anheben notwendig wird. Dies tritt z.B. bei Rotationsverdampfern auf, wenn der Verdampferkolben schnell aus dem Heizbad gehoben werden muss, um einen Verdampfungsvorgang oder eine Reaktion zu unterbrechen. Auch sollte die Höhe der Haltevorrichtung manuell einstellbar sein, was bei den konventionellen Motorantrieben nicht möglich ist.

Der Erfindung liegt die Aufgabe zugrunde, ein höhenverstellbares Stativ für Laborgeräte der eingangs genannten Art zu schaffen, das bei einfachstem Aufbau sowohl manuelle als auch motorische Verstellung in jeder beliebigen Betriebslage, d.h. sowohl bei aktiviertem Antriebsmotor als auch bei stillstehendem Antriebsmotor ermöglicht.

Erfindungsgemäss wird diese Aufgabe mit einem Stativ gelöst, das die Merkmale im Anspruch 1 aufweist.

Wesentlich für die Erfindung ist dabei also, dass die Kupplung zwischen der an der Stativstange verschiebbaren Halteeinrichtung und der Hubeinrichtung vorgesehen ist. Auf diese Weise kann die Halteeinrichtung zu jedem beliebigen Zeitpunkt, bei stillstehendem oder laufendem Motor ausgekuppelt werden. So lässt sich einerseits ausserordentlich schnell in den Verfahrensablauf eingreifen. Anderseits kann auch ein Hub- oder Absenk-Vorgang unterbrochen werden, indem einfach bei laufendem Motor die Kupplung gelöst wird. Bei Ausfall des Antriebsmotors lässt sich ebenfalls ohne weiteres die Halteeinrichtung manuell anheben oder absenken und durch einfaches Einkuppeln in jeder beliebigen Lage wieder fest arretieren. Separate Gesprerreeinrichtungen wie z.B. Zahnstangen oder dergleichen sind nicht erforderlich.

Als Endlos-Förderer haben sich besonders bewährt Spindelantriebe, umlaufende Riemen-, Band- oder Kettenantriebe. Bei Stillstand wird durch die Kupplungseinrichtung die Kalteeinrichtung mit dem Förderer gekoppelt und dadurch in der jeweiligen Höhe arretiert. Im Betrieb kann durch Auskuppeln jederzeit die Hub- oder Absenkbewegung der Halteeinrichtung dadurch unterbrochen werden, dass die Kupplungseinrichtung gelöst wird. Der endlose Förderer läuft in einem solchen Fall einfach weiter, bis er abgeschaltet wird. Danach kann die Kupplung wieder eingelegt werden. Als Kupplungen haben sich besonders Mitnehmer-Elemente bewährt, die sich durch Kraftschluss oder Formschluss mit dem Förder in Eingriff bringen lassen. Bei Verwendung eines Spindelantriebs kann das Mitnehmer-Element eine beliebige Klauenanordnung sein, die in die Spindelgänge einlegbar und durch diese mitnehmbar ist. Dabei ergibt sich besonders gute Kraftübertragung, wenn das Mitnehmer-Element als eine Art Teil-Gewinde ausgebildet ist, das seitlich komplementär mit der Spindel in Eingriff bringbar ist.

Bei Kettenförderern kann als Mitnehmer-Element z.B. ein zahnradartig ausgebildetes Element seitlich in die Kettenglieder eingepresst werden. Bei Band- oder Riemenförderern können beliebige Klemmanordnungen vorgesehen werden, die z.B. unter Federspannung stehen und mit dem laufenden Band oder dem stehenden Band verklemmt werden.

Besonders vorteilhaft lässt sich die Erfindung realisieren, wenn an der Halteeinrichtung ein Handgriff zum Ergreifen und manuellen Absenken oder Abheben vorgesehen ist. Dabei kann einhändiges Einkuppeln und Auskuppeln besonders gut bewerkstelligt werden, wenn am Handgriff ein Betätigungselement für die Kupplung vorgesehen ist.

Die Erfindung ist im folgenden in Ausführungsbeispielen und anhand der Zeichnungen näher erläutert. Es zeigen:
- Figur 1: die schematische Darstellung eines Stativs mit den Merkmalen der Erfindung,
- Figur 2: ein abgewandeltes Ausführungsbeispiel eines Stativs mit den Merkmalen der Erfindung, und
- Figur 3 und 4: ein erfindungsgemässes Stativ im Ausschnitt in schematischer Seitenansicht bzw. in Draufsicht.

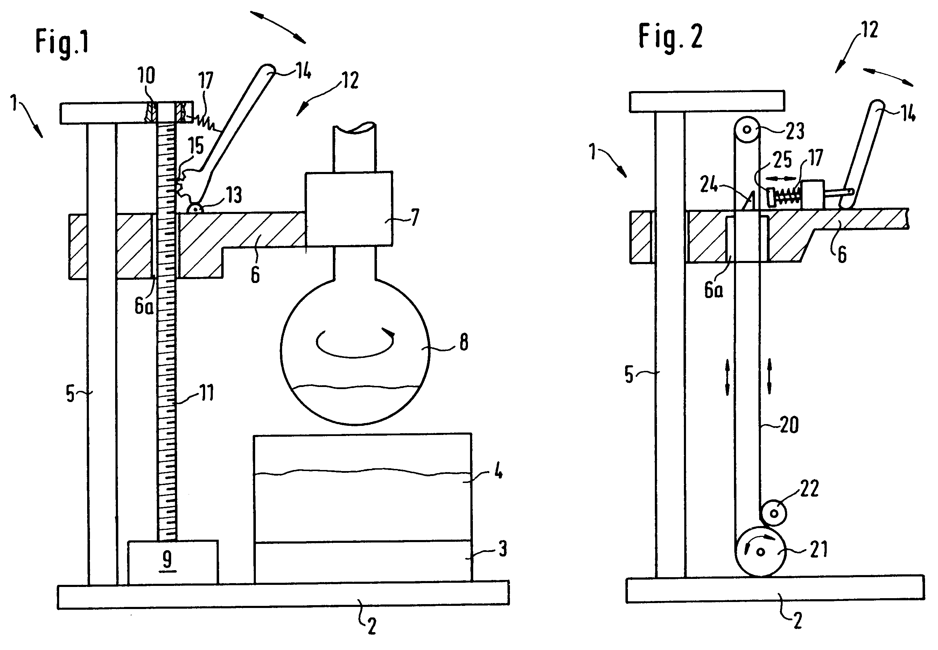

Gemäss Figur 1 weist ein Stativ 1 für einen Rotationsverdampfer eine Grundplatte 2 mit einer Heizvorrichtung 3 und einem Heizbad 4 auf. Auf der Grundplatte 2 ist eine Stativstange 5 befestigt, welche eine Halteeinrichtung 6 trägt. An der Halteeinrichtung 6 ist ein nicht näher dargestellter Dreh-Antrieb 7 für den Verdampferkolben 8 befestigt. Zum Anheben und Absenken der Halteeinrichtung 6 bzw. des Verdampferkolbens 8 in das Heizbad 4 bzw. aus dem Heizbad 4 ist ein Elektro-Motor 9 vorgesehen, der eine parallel zur Stativstange 5 angeordnete, und in einem Lager 10 drehbare Spindel 11 trägt. Die Spindel 11 läuft durch eine Bohrung 6a in der Halteeinrichtung 6, in der sie sich frei drehen kann. Auf der Halteeinrichtung 6 ist eine Kupplung 12 vorgesehen, mit welcher die Halteeinrichtung 6 mit der Spindel 11 in Antriebsverbindung bringbar ist.

Die Kupplung 12 weist einen an einem Gelenk 13 verschwenkbaren Hebel 14 auf, der an seiner der Spindel 11 zugewandten Seite eine Anzahl von Klauen 15 aufweist, welche in das Spindel-Gewinde eingreifen. Der Hebel wird dabei durch eine Feder 17 derart gegen die Spindel 11 gepresst, dass die Klauen fest in die Spindel 11 eingreifen und für Antriebsverbindung zwischen Spindel 11 und Halteeinrichtung 6 sorgen. Bei einer Betätigung des Hebels 14 im Uhrzeigersinn werden die Klauen 15 ersichtlicherweise von der Spindel 11 getrennt, so dass die Halteeinrichtung 6 von Hand auf der Stativstange 5 verschoben werden kann. Eine solche Betätigung kann z.B. bei stehender Spindel 11 erfolgen, um die Halteeinrichtung 6 bzw. den Verdampferkolben 8 manuell anzuheben oder abzusenken. Aber auch bei rotierender Spindel 11 kann der Hebel 14 betätigt werden, z.B. um ein zu tiefes Absenken oder Anschlagen des Verdampferkolbens zu verhindern.

Selbstverständlich kann die Kupplung 12 auch zusätzlich mit einem elektrischen Betätigungselement versehen sein. In Anwendung einer solchen Modifikation könnte z.B. beim Ausführungsbeispiel gemäss Figur 1 am Hebel 14 ein Elektro-Zugmagnet angreifen, welcher den Hebel in die Ein- bzw. Auskupplungs-Stellung verschwenkt.

Im Ausführungsbeispiel gemäss Figur 2 ist anstelle einer Spindel ein umlaufender Keilriemen 20 vorgesehen, der durch ein Antriebsrad 21 angetrieben und durch 2 Umlenk-Räder 22, 23 umgelenkt wird. Das Antriebsrad 21 kann durch einen nicht dargestellten Antriebsmotor in beiden Drehrichtungen angetrieben werden. Beim Ausführungsbeispiel gemäss Figur 2 besteht die Kupplung aus einer Klemmvorrichtung mit einem fest an der Halteeinrichtung 6 befestigten Klemmteil 24 und einem beweglichen Klemmteil 25, das durch die Feder 17 in Richtung auf das feste Klemmteil 24 derart vorgespannt wird, dass zwischen den beiden Klemmteilen 24 bzw. 25 der Keilriemen 20 ergriffen und kraftschlüssig gehalten wird. In dieser Kupplungs-oder Klemmstellung bewirkt demnach jede Bewegung des Keilriemens 20 ein Anheben oder Absenken der Halteeinrichtung 6. Zum Lösen der Kupplung wird der Hebel 14 gegen die Kraft der Feder 17 betätigt, so dass das Klemmteil 25 den Keilriemen 20 freigibt.

Selbstverständlich lassen sich statt eines Keilriemens auch andere endlose Fördermittel, z.B. Bänder, Drähte, Ketten oder Zahnriemen einsetzen, ohne dass dadurch der Grundgedanke der Erfindung verlassen würde.

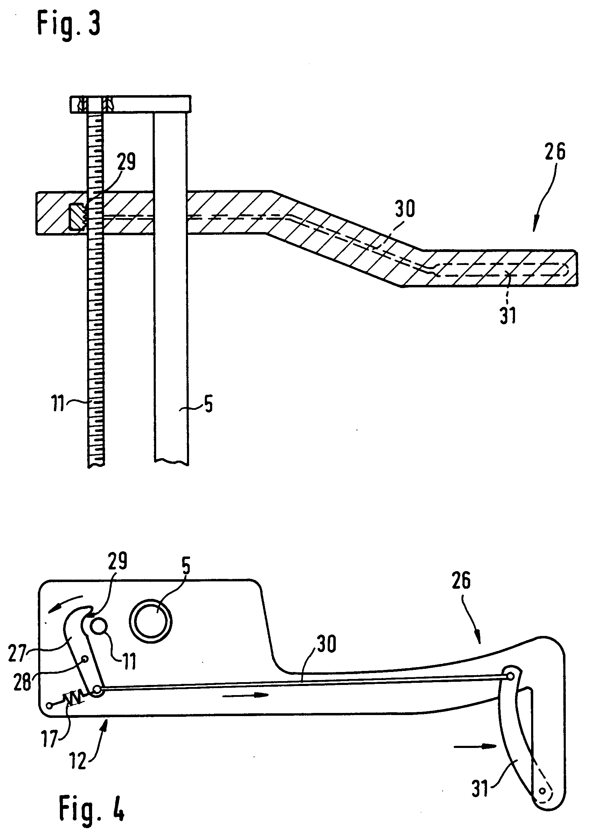

Beim Ausführungsbeispiel gemäss Figur 3 und 4 ist der Übersicht halber nur die Halteeinrichtung 6 in Verbindung mit der Stativstange 5 und der Spindel 11 dargestellt. An der Halteeinrichtung 6 ist zur Vereinfachung der Bedienung ein Handgriff 26 vorgesehen, mit welchem die Halteeinrichtung 6 nach dem Auskuppeln manuell auf der Stativstange 5 angehoben oder abgesenkt werden kann. Die Kupplung 12 weist dabei einen Hebel 27 auf, der um einen Drehpunkt 28 verschwenkbar ist. Der Hebel 27 ist an seiner der Spindel 11 zugewandten Seite mit einer Anzahl von Teil-Gewindegängen 29 vesehen. Die Feder 17 presst den Hebel 27 bzw. die Teil-Gewindegänge 29 derart gegen die Spindel 11, dass eine formschlüssige Antriebsverbindung entsteht. Der Hebel 27 ist mittels einer Zugstange 30 mit einem Betätigungselement 31 verbunden, das am Handgriff 26 angeordnet ist. Auf diese Weise kann einhändig durch Druck auf das Betätigungselement 31 zunächst der Hebel 27 gegen die Federkraft 17 verschwenkt und dadurch die Halteeinrichtung 6 von der Spindel 11 ausgekuppelt werden. Danach kann mittels des Handgriffs 26 auf einfache Weise die Halteeinrichtung 6 angehoben oder abgesenkt werden.

Ersichtlicherweise könnte die Hubeinrichtung auch anstelle der Spindel 11 eine stehende Zahnstange aufweisen, in die ein an der Halteeinrichtung 6 befestigtes Schneckenrad eingreift, das durch einen ebenfalls an der Halteeinrichtung 6 befestigten Motor angetrieben wird. Bei einer solchen kinematischen Vertauschung muss lediglich sichergestellt werden, dass durch die Kupplung das genannte Schneckenrad von der Zahnstange getrennt wird. Diese und andere Abwandlungen sind dem Fachmann geläufig.

## Patentansprüche

1. Höhenverstellbares Stativ für Laborgeräte, insbesondere für Rotationsverdampfer, mit einer Halteeinrichtung (6) die an einer Stativstange (5) verschiebbar befestigt ist, und mit einer motorgetriebenen Hubeinrichtung (9, 11; 20, 21, 22, 23), die an der Halteeinrichtung (6) angreift, wobei die Hubeinrichtung einen etwa parallel zur Stativstange (5) angeordneten Endlos-Förderer (11, 20) aufweist, dadurch gekennzeichnet dass zwischen der Hubeinrichtung (11, 20) und der Halteeinrichtung (6) eine Kupplung (12) zum antriebsmässigen Verbinden und Lösen von Hubeinrichtung und Halteeinrichtung vorgesehen ist, und dass die Kupplung (12) ein mit dem Endlos-Förderer (11, 20) in Eingriff bringbares Mitnehmer-Element (15, 24, 25, 29) aufweist.

2. Stativ nach Anspruch 1, dadurch gekennzeichnet, dass der Endlos-Förderer eine Spindel (11) aufweist.

3. Stativ nach Anspruch 2, dadurch gekennzeichnet, dass das Mitnehmer-Element wenigstens einen mit dem Spindelgewinde in Eingriff bringbaren Teil-Gewindegang (29) aufweist.

4. Stativ nach Anspruch 1, dadurch gekennzeichnet, dass der Endlos-Förderer ein etwa parallel zur Stativstange (5) endlos umlaufendes, beidseitig umgelenktes Fördermittel (20) aufweist.

5. Stativ nach Anspruch 4, dadurch gekennzeichnet, dass das Fördermittel ein Transport-Band, insbesondere ein Transport-Riemen (20) ist.

6. Stativ nach Anspruch 4, dadurch gekennzeichnet, dass das Fördermittel eine Kette ist.

7. Stativ nach Anspruch 4, dadurch gekennzeichnet, dass das Fördermittel ein Zahnriemen ist.

8. Stativ nach einem der vorangegangenen Ansprüche, dadurch gekennzeichnet, das an der Halteeinrichtung (6) ein Handgriff (26) zum manuellen Anheben oder Absenken der Halteeinrichtung (6) vorgesehen ist.

9. Stativ nach Anspruch 8, dadurch gekennzeichnet, dass ein Betätigungselement (31) zum gleichzeitigen manuellen Auskuppeln und Anheben oder Absenken am Handgriff (26) angeordnet ist.

## Claims

1. A height-adjustable support stand for laboratory equipment, in particular for rotary evaporators, comprising a holding device (6) which is displaceably feed to a support stand bar (5), and a motor-driven lifting device (9, 11; 20, 21, 22, 23) which engages the holding device (6), wherein the lifting device has an endless conveyor (11, 20) which is arranged approximately parallel to the support stand bar (5), characterised in that provided between the lifting device (11, 20) and the holding device (6) is a coupling (12) for drivingly connecting and releasing the lifting device and the holding device, and that the coupling (12) has an entrainment element (15, 24, 25, 29) which can be brought into engagement with the endless conveyor (11, 20).

2. A support stand according to claim 1 characterised in that the endless conveyor has a spindle (11).

3. A support stand according to claim 2 characterised in that the entrainment element has at least one partial screwthread pitch (29) which can be brought into engagement with the spindle screwthread.

4. A support stand according to claim 1 characterised in that the endless conveyor has a conveyor means (20) which circulates endlessly approximately parallel to the support stand bar (5) and which is changed in direction at both ends.

5. A support stand according to claim 4 characterised in that the conveyor means is a transport band, in particular a transport belt (20).

6. A support stand according to claim 4 characterised in that the conveyor means is a chain.

7. A support stand according to claim 4 characterised in that the conveyor means is a toothed belt.

8. A support stand according to one of the preceding claims characterised in that provided on the holding device (6) is a handle (26) for manually raising or lowering the holding device (6).

9. A support stand according to claim 8 characterised in that an actuating element (31) for simultaneous manual uncoupling and raising or lowering is arranged on the handle (26).

## Revendications

1. Statif réglable en hauteur pour appareils de laboratoire, en particulier pour évaporateurs rotatifs, comportant un dispositif de support (6) qui est fixé, mobile, à une tige de statif (5), et un dispositif de levage (9, 11; 20, 21, 22, 23) entraîné par un moteur, qui agit sur le dispositif de support (6), le dispositif de levage comportant un transporteur sans fin (11, 20) disposé à peu près parallèlement à la tige de statif (5), caractérisé en ce qu'il est prévu, entre le dispositif de levage (11, 20) et le dispositif de support (6), un accouplement (12) destiné à réaliser et à supprimer une liaison d'entraînement entre le dispositif de levage et le dispositif de support, et en ce que l'accouplement (12) comporte un élément d'entraînement (15, 24, 25, 29) apte à être mis en prise avec le transporteur sans fin (11, 20).

2. Statif selon la revendication 1, caractérisé en ce que le transporteur sans fin comporte une broche (11).

3. Statif selon la revendication 2, caractérisé en ce que l'élément d'entraînement comporte au moins un pas de vis partiel (29) apte à être mis en prise avec le filetage de la broche.

4. Statif selon la revendication 1, caractérisé en ce que le transporteur sans fin comporte un moyen de transport sans fin (20) à peu près parallèle à la tige de statif (5) et dévié des deux côtés.

5. Statif selon la revendication 4, caractérisé en ce que le moyen de transport est une bande transporteuse, en particulier une courroie transporteuse (20).

6. Statif selon la revendication 4, caractérisé en ce que le moyen de transport est une chaîne.

7. Statif selon la revendication 4, caractérisé en ce que le moyen de transport est une courroie dentée.

8. Statif selon l'une des revendications précédentes, caractérisé en ce qu'il est prévu, sur le dispositif de support (6), une poignée (26) pour relever ou abaisser à la main le dispositif de support (6).

9. Statif selon la revendication 8, caractérisé en ce qu'un élément d'actionnement (31) est disposé sur la poignée (26) pour le désaccouplement et le levage ou l'abaissement manuels simultanés.
